# EUROPÄISCHE PATENTSCHRIFT

(11) **EP 0 507 738 B1**
(45) Veröffentlichungstag und Bekanntmachung des Hinweises auf die Patenterteilung: **17.07.1996**
(21) Anmeldenummer: 92810233.4
(22) Anmeldetag: 30.03.1992
(51) Int. Cl.: C07F 9/40

(54) **Verfahren zur Herstellung von sterisch gehinderten Hydroxybenzylphosphonaten**
Process for preparing sterically mindered hydroxybenzylphosphonates
Procédé de préparation d'hydroxybenzylphosphonates à empêchement stérique

(30) Priorität: 05.04.1991 CH 1016/91
(43) Veröffentlichungstag der Anmeldung: 07.10.1992
(73) Patentinhaber: CIBA-GEIGY AG, 4002 Basel (CH)
(72) Erfinder: Kainmüller, Thomas, Dr., W-6145 Lindenfels 1 (DE); Maul, Rudolf, Dr., W-6143 Lorsch/Hessen (DE)

(56) Entgegenhaltungen:
- US-A- 4 263 232
- SOVIET INVENTIONS ILLUSTRATED Section Ch, Week Y26, Derwent Publications Ltd., London, GB; Class A, AN 46410Y/26

## Beschreibung

Die Erfindung betrifft ein Verfahren zur Herstellung von sterisch gehinderten Hydroxybenzylphosphonaten durch Umsetzung von 3,5-Di(cyclo)alkyl-4-hydroxybenzylaminen mit Trialkylphosphiten und Carbonsäureanhydriden.

Sterisch gehinderte Hydroxybenzylphosphonate werden beispielsweise als Verarbeitungsstabilisatoren für Kunststoffe eingesetzt. Es ist eine Reihe von Verfahren zu ihrer Herstellung bekannt (S. z.B. US-A 3,790,648, US-A 3,006,945, SU-A 619 486, DE-A 2 222 708, FR-A 1 382 891).

Eine Gruppe dieser Verfahren nutzt die Reaktion mit den bequem herzustellenden Mannich-Basen der Formel 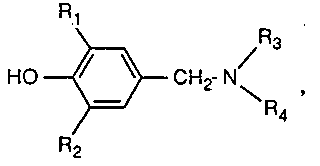
worin die Reste R₁ bis R₄ z.B. die unten beschriebenen Bedeutungen haben können.

US-A 3,155,704 sowie DE-A 2 312 910 beschreiben die Quaternierung solcher Mannich-Basen mit Methyljodid und Umsetzung der Ammoniumsalze mit Trialkylphosphiten. Methyljodid ist aber zum einen relativ teuer und zum anderen stark krebserregend und demzufolge nur unter strengen Sicherheitsvorkehrungen zu handhaben. Zudem sind die quartären Ammonium salze in kostengünstigen, unpolaren aprotischen Lösungsmitteln im allgemeinen schlecht löslich und können zu Wandbelägen (Verkrustungen) führen.

Nach US-A 3,790,648 setzt man die Mannich-Basen in Gegenwart von Alkalimetallen bzw. deren Hydriden oder Amiden mit Dialkylphosphiten um. Bei diesem Verfahren müssen stark basische Feststoffe gehandhabt werden, und bei Verwendung des kostengünstigen Dimethylamins zur Herstellung der Mannich-Base müßte dieses als bei Raumtemperatur gasförmiges Produkt unter erhöhtem technischen Aufwand wiedergewonnen werden, da es bei der Reaktion freigesetzt wird. Infolge der besonderen Anfälligkeit von Ausgangsstoffen und Produkten in Gegenwart starker Alkalien bilden sich sich verfärbte Produkte, die sich zwar nach US-A 4,263,232 durch Additive vermeiden lassen, aber auch die Ausbeuten lassen zu wünschen übrig. Außerdem besteht die Gefahr der unerwünschten Verseifung der Produkte.

DE-A 2 456 532 und V.V. Ovchinnikow et al. in Zh. Obshch. Khim. **51**, 999 (1981) beschreiben die direkte Umsetzung von Mannichbasen mit Tri- bzw Dialkylphosphiten. Nachteile dieser Verfahrensweise sind die langen Reaktionszeiten und die Tatsache, daß freies Amin als Nebenprodukt entsteht.

In SOVIET INVENTIONS ILLUSTRATED Section Ch, Week Y26, Derwent Publications Ltd., London, GB; Class A, AN 46410Y/26 (Kurzreferat der SU-A-486024) ist die Herstellung von (4,4')-Dihydroxy-(3,3')-bis-diethylphosphonobenzyl-propan durch Reaktion von (3,5')-Di-(diethylaminomethyl)-diphenylpropan mit Triethylphosphit in Anwesenheit von Essigsäure in xylol beschrieben.

In DE-A 2 312 910 sind auch Alternativen zu den Mannich-Basen beschrieben, in denen z.B. an Stelle der Aminogruppe Bromid oder Acetat tritt. Die Verbindungen werden vor der Umsetzung mit Phosphiten isoliert, und die Gesamtausbeuten sind wesentlich geringer als bei Verwendung der entsprechenden Mannich-Basen.

Es besteht also weiterhin ein Bedarf nach neuen Verfahren, die eines oder mehrere der genannten Probleme lösen.

Überraschenderweise wurde nun gefunden, daß man Hydroxybenzylphosphonate der Formel 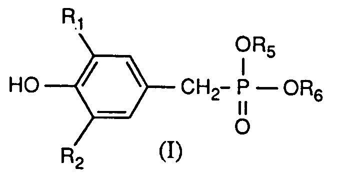
in guten Ausbeuten, unter weitgehender Vermeidung von Verfärbungen und unter Einsatz kostengünstiger und toxikologisch wenig problematischer Reagentien herstellen kann, indem man eine Mannichbase der Formel 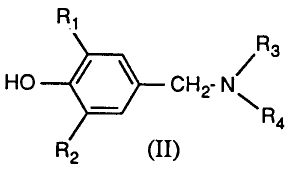
mit einem Trialkylphosphit der Formel 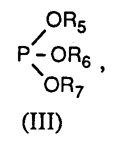
worin R₁ und R₂ unabhängig voneinander C₁-C₁₂-Alkyl oder C₅-C₇-Cycloalkyl sind, R₃ und R₄ unabhängig voneinander C₁-C₁₂-Alkyl sind oder zusammen einen Piperidinyl- oder Morpholinylrest bilden, und R₅, R₆ und R₇ unabhängig voneinander C₁-C₄-Alkyl sind, dadurch gekennzeichnet, daß man die Umsetzung in Gegenwart eines Carbonsäureanhydrids (IV) durchführt.

Stellen in obigen Formeln R₁, R₂, R₃, und R₄ C₁-C₁₂-Alkyl dar, so handelt es sich dabei um verzweigte oder unverzweigte Reste. Beispiele hierfür sind Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl, Decyl, Undecyl, Dodecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl oder 1-Methylundecyl. Sind R₅, R₆ und R₇ C₁-C₄-Alkyl, kommen dafür z.B. Methyl, Ethyl, Propyl, Isopropyl, n-Butyl, Isobutyl und t-Butyl in Betracht.

R₁ und R₂ als C₅-C₇-Cycloalkyl können Cyclopentyl, Cyclohexyl oder Cycloheptyl sein.

In einer zweckmäßigen Ausführungsform wird die Reaktion so geführt, daß die Phosphitmenge während der Reaktion nicht unter die Anhydridmenge absinkt.

Das mit IV bezeichnete Carbonsäureanhydrid kann sich von beliebigen Carbonsäuren ableiten. Beispiele für solche Anhydride sind Acetanhydrid, Bernsteinsäureanhydrid, Phthalsäureanhydrid, Tetrahydrophthylsäureanhydrid, Methyltetrahydrophthalsäureanhydrid (vorliegend als Isomerengemisch) sowie Hexahydrophthalsäureanhydrid. Bevorzugt verwendet man Acetanhydrid, Phthalsäureanhydrid oder Hexahydrophthalsäureanhydrid, insbesondere Acetanhydrid.

Die Reaktionstemperaturen liegen zweckmäßig zwischen Raumtemperatur und 200°C, vorzugsweise bei 50 bis 140°C, insbesondere bei 60 bis 120°C.

Das verfahren wird zweckmäßig bei atmosphärischem Druck (Normaldruck) durchgeführt.

Man kann ohne Lösungsmittel arbeiten. Zweckmäßig ist jedoch die Gegenwart eines organischen, insbesondere aprotischen Lösungsmittels. Letzeres kann unpolar oder polar sein. Beispiele für polare aprotische Lösungsmittel sind Dimethylformamid, Dimethylacetamid und N-Methylpyrrolidon. Bevorzugte Lösungsmittel sind aprotisch und unpolar, z.B. aliphatische Kohlenwasserstoffe wie Heptan, Octan, Cyclohexan, Decalin, Mineralöldestillate wie Petrolether, Ligroin, kerosin, aromatische Kohlenwasserstoffe wie Benzol, Toluol oder Xylole, oder Mischungen aus den genannten Lösungsmitteln.

Besonders bevorzugt sind Petroletherfraktionen, Benzol, Toluol und die isomeren Xylole, vor allem die Petroletherfraktion 100/140 (Naphthabenzin), Benzol und Toluol.

Das Verfahren eignet sich besonders zur Herstellung von Verbindungen der Formel I, worin R₁ und R₂ unabhängig voneinander C₁-C₆-Alkyl oder Cyclohexyl sind, und R₃ und R₄ unabhängig voneinander C₁-C₆-Alkyl sind oder zusammen einen Piperidinyl- oder Morpholinylrest bilden.

Ganz besonders gut ist das Verfahren zur Herstellung von Verbindungen der Formel I geeignet, worin R₁ und R₂ tert-Butylreste sind. In diesem Fall sind die Ausbeuten besonders hoch.

Die Ausgangsstoffe II, III und IV werden zweckmäßig in etwa äquimolaren Mengen eingesetzt (wobei ein Überschuß von bis zu 20%, insbesondere bis zu 10% eines oder mehrerer Reaktionsteilnehmer vorteilhaft sein kann, z.B. des Phosphits und/oder des Anhydrids), und zwar vorzugsweise so, daß II und III vorgelegt werden und IV über einen Zeitraum, der je nach Größe des Ansatzes bis zu mehreren Stunden dauert, zugegeben wird. Durch diese Verfahrensweise sinkt die Phosphitmenge während der Reaktion nicht unter die Anhydridmenge ab.

Die Aufarbeitung der Produkte der Formel I erfolgt nach geläufigen Verfahren, wie Auswaschen der wasserlöslichen Nebenprodukte, Umkristallisieren etc. In der Regel versetzt man das Reaktionsgemisch mit Wasser, um wasserslösliche Reaktionsprodukte zu entfernen. Das gewünschte Produkt fällt dabei oder nach Entfernen des Wassers aus dem Reaktionsgemisch aus. Es kann dann abgesaugt und mit dem benutzten Lösungsmittel gewaschen werden. Die Reaktionsprodukte des Carbonsäureanhydrids, z.B. Verbindungen des Typs R-CO-O-R_{5,6,7} bzw. R-CO-NR₃R₄, wobei R-CO den Säurerest aus dem Anhydrid darstellt, bleiben für gewöhnlich in Lösung oder gehen beim Waschen in die wäßrige Phase über.

Die als Ausgangsstoffe verwendeten Mannichbasen der Formel II sind annähernd quantitativ aus einem Dialkylphenol 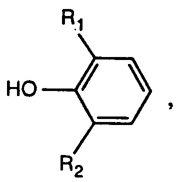
Formaldehyd und einem sekundären Amin 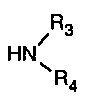
erhältlich, wie z.B. in DE-A 2 312 910 beschrieben.

Die nach dem erfindungsgemäßen Verfahren hergestellten Verbindungen sind als Stabilisatoren für eine Vielzahl von organischen Monomeren und Polymeren gegen thermischen, oxidativen und/oder photoinduzierten Abbau geeignet, wie z.B. in US-A 3,280,070, US-A 3,281,505 und US-A 3,367,870 beschrieben.

Die folgenden Beispiele erläutern die Erfindung weiter, ohne sie jedoch zu beschränken. Teile- und Prozentangaben beziehen sich - wie auch in der übrigen Beschreibung - sofern nicht anders angebeben, auf das Gewicht.

### Beispiel 1:

In einem thermostatisierbaren Reaktionsgefäß werden 553,8 g (2,1 mol) (4-Hydroxy-3,5-di-tert-butyl-benzyl)dimethylamin und 450 g Petrolether 100/140 vorgelegt. Unter Rühren und Inertgasspülung wird auf 60°C erwärmt. Zur klaren Lösung läßt man 366,4 g (2,2 mol) Triethylphosphit zulaufen. Anschließend werden bei 60°C 225,1 g (2,2 mol) Essigsäureanhydrid unter Kühlung innerhalb von 2 Stunden zugetropft, und es wird eine Stunde bei 60°C weitergerührt. Das Lösungsmittel wird abdestilliert, bis die Lösung eine Temperatur von 115°C erreicht. Die verbliebene Reaktionslösung wird bei 75°C viermal mit je 250 ml Wasser gewaschen und durch Azeotropdestillation getrocknet. Beim Abkühlen auf Raumtemperatur kristallisiert das Produkt aus, das abgesaugt und mit Petrolether 100/140 gewaschen wird. Nach dem Trocknen erhält man 693,2 g (92,6%d.Th.) 4-Hydroxy-3,5-di-tert-butylbenzyl-phosphonsäurediethylester als farbloses Produkt. Smp.: 119-121 °C.

### Beispiel 2:

In einem thermostatisierbaren Reaktionsgefäß werden 263 g (1 mol) (4-Hydroxy-3,5-di-tert-butyl-benzyl)dimethylamin und 500 g Petrolether 100/140 vorgelegt. Unter Rühren und Inertgasspülung wird auf 80°C erwärmt. Zur klaren Lösung läßt man 130 g (1.05 mol) Trimethylphosphit zulaufen. Anschließend werden bei 80°C 107 g (1,05 mol) Essigsäureanhydrid unter Kühlung innerhalb von 2 Stunden zugetropft, und es wird 2 Stunden bei 80°C weitergerührt. Anschließend wird Lösungsmittel abdestilliert bis 115°C erreicht sind. Das verbleibende Reaktionsgemisch wird auf Raumtemperatur abgekühlt und mit 1 l Wasser gerührt. Das auskristallisierte Produkt wird abgesaugt und mit Petrolether 100/140 gewaschen. Nach dem Trocknen erhält man 307 g (93% d.Th.) 4-Hydroxy-3,5-di-tert-butylbenzyl-phosphonsäuredimethylester als fast farbloses Produkt. Smp.: 156-160°C.

### Beispiel 3:

In einem thermostatisierbaren Reaktionsgefäß werden 13,1 g (0,073 mol) (4-Hydroxy-3,5-dimethyl-benzyl)dimethylamin und 20 g Petrolether 100/140 vorgelegt. Unter Rühren und Inertgasspülung wird auf 80°C erwärmt. Zur klaren Lösung läßt man 12,2 g (0,073 mol) Triethylphosphit zulaufen. Anschließend werden bei 80°C 7,5 g (0,073 mol) Essigsäureanhydrid unter Kühlung innerhalb von einer Stunde zugetropft, und es wird eine Stunde bei 80°C weitergerührt. Anschließend wird analog Beispiel 2 aufgearbeitet. Man erhält 16,9 g (85 % d.Th.) 4-Hydroxy-3,5-di-methyl-benzyl-phosphonsäurediethylester. Smp.: 70-71°C.

## Patentansprüche

1. Verfahren zur Herstellung von Hydroxybenzylphosphonaten der Formel 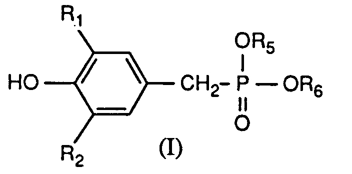 durch Umsetzung einer Mannichbase der Formel 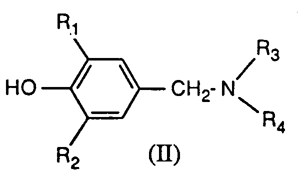 mit einem Trialkylphosphit der Formel 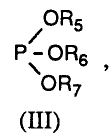 worin
R₁ und R₂ unabhängig voneinander C₁-C₁₂-Alkyl oder C₅-C₇-Cycloalkyl sind,
R₃ und R₄ unabhängig voneinander C₁-C₁₂-Alkyl sind oder zusammen einen Piperidinyl- oder Morpholinylrest bilden, und
R₅, R₆ und R₇ unabhängig voneinander C₁-C₄-Alkyl sind, dadurch gekennzeichnet, daß man die Umsetzung in Gegenwart eines Carbonsäureanhydrids (IV) durchführt.

2. Verfahren nach Anspruch 1, dadurch gekennzeichnet, daß die Phosphitmenge während der Reaktion nicht unter die Anhydridmenge absinkt.

3. Verfahren nach Anspruch 1 wobei in Formel II R₁ und R₂ unabhängig voneinander C₁-C₆-Alkyl oder Cyclohexyl sind, und
R₃ und R₄ unabhängig voneinander C₁-C₆-Alkyl sind oder zusammen einen Piperidinyl oder Morpholinylrest bilden.

4. Verfahren nach Anspruch 1, wobei in den Formeln I und II R₁ und R₂ tert-Butylreste sind.

5. Verfahren nach Anspruch 1, dadurch gekennzeichnet, daß man als Carbonsäureanhydrid Acetanhydrid, Phthalsäureanhydrid oder Hexahydrophthalsäureanhydrid verwendet.

6. Verfahren nach Anspruch 1, dadurch gekennzeichnet, daß die Reaktionstemperaturen zwischen Raumtemperatur und 200°C liegen.

7. Verfahren nach Anspruch 6, dadurch gekennzeichnet, daß die Reaktionstemperaturen bei 50 bis 140°C liegen.

8. Verfahren nach Anspruch 7, dadurch gekennzeichnet, daß die Reaktionstemperaturen bei 60 bis 120°C liegen.

9. Verfahren nach Anspruch 1, dadurch gekennzeichnet, daß es in einem aprotischen und unpolaren Lösungsmittel durchgeführt wird.

10. Verfahren nach Anspruch 9, dadurch gekennzeichnet, daß es in einem der Lösungsmittel Petrolether 100/140 (Naphthabenzin), Benzol oder Toluol durchgeführt wird.

## Claims

1. A process for the preparation of a hydroxybenzylphosphonate of formula 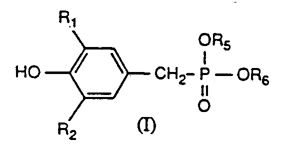 by reacting a Mannich base of formula 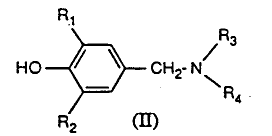 with a trialkyl phosphite of formula 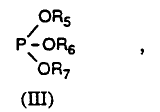 wherein
R₁ and R₂ are each independently of the other C₁-C₁₂alkyl or C₅-C₇cycloalkyl,
R₃ and R₄ are each independently of the other C₁-C₁₂alkyl or, when taken together, form a piperidinyl or morpholinyl radical, and
R₅, R₆ and R₇ are each independently of one another C₁-C₄alkyl, which reaction is carried out in the presence of a carboxylic anhydride (IV).

2. A process according to claim 1, wherein the amount of phosphite does not fall below that of the anhydride in the course of the reaction.

3. A process according to claim 1, wherein in formula II R₁ and R₂ are each independently of the other C₁-C₆alkyl or cyclohexyl, and
R₃ and R₄ are each independently of the other C₁-C₆alkyl or, when taken together, form a piperidinyl or morpholinyl radical.

4. A process according to claim 1, wherein in formulae I and II R₁ and R₂ are tert-butyl radicals.

5. A process according to claim 1, wherein the carboxylic anhydride used is acetic anhydride, phthalic anhydride or hexahydrophthalic anhydride.

6. A process according to claim 1, wherein the reaction temperature is between room temperature and 200°C.

7. A process according to claim 6, wherein the reaction temperature is from 50 to 140°C.

8. A process according to claim 7, wherein the reaction temperature is from 60 to 120°C.

9. A process according to claim 1, which is carried out in an aprotic and non-polar solvent.

10. A process according to claim 9, which is carried out in one of the solvents petroleum ether 100/140 (naphtha), benzene or toluene.

## Revendications

1. Procédé pour préparer des hydroxybenzylphosphonates de formule 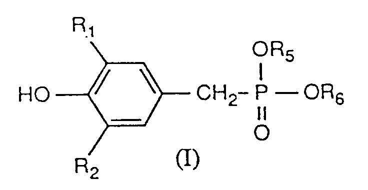 par réaction d'une base de Mannich de formule 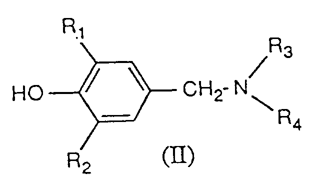 avec un phosphite de trialkyle de formule 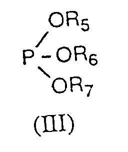 dans laquelle
R₁ et R₂, indépendamment l'un de l'autre, sont chacun un groupe alkyle en C₁-C₁₂ ou cycloalkyle en C₅-C₇,
R₃ et R₄, indépendamment l'un de l'autre, sont chacun un groupe alkyle en C₁-C₁₂, ou forment ensemble un résidu pipéridinyle ou morpholinyle, et
R₅, R₆ et R₇, indépendamment l'un de l'autre, sont chacun un groupe alkyle en C₁-C₄,
caractérisé en ce qu'on met en oeuvre la réaction en présence d'un anhydride carboxylique (IV).

2. Procédé selon la revendication 1, caractérisé en ce que la quantité de phosphite, pendant la réaction, ne tombe pas en dessous de la quantité de l'anhydride.

3. Procédé selon la revendication 1, dans lequel, dans la formule II, R₁ et R₂, indépendamment l'un de l'autre, sont chacun un groupe alkyle en C₁-C₆ ou cyclohexyle, et R₃ et R₄, indépendamment l'un de l'autre, sont chacun un groupe alkyle en C₁-C₆ ou forment ensemble un résidu pipéridinyle ou morpholinyle.

4. Procédé selon la revendication 1, dans lequel, dans les formules I et II, R₁ et R₂ sont des groupes tert-butyle.

5. Procédé selon la revendication 1, caractérisé en ce qu'on utilise comme anhydride carboxylique l'anhydride acétique, l'anhydride phtalique ou l'anhydride hexahydrophtalique.

6. Procédé selon la revendication 1, caractérisé en ce que les températures de réaction sont comprises entre la température ambiante et 200°C.

7. Procédé selon la revendication 6, caractérisé en ce que les températures de réaction sont comprises entre 50 et 140°C.

8. Procédé selon la revendication 7, caractérisé en ce que les températures de réaction sont comprises entre 60 et 120°C.

9. Procédé selon la revendication 1, caractérisé en ce qu'il est mis en oeuvre dans un solvant aprotique et apolaire.

10. Procédé selon la revendication 9, caractérisé en ce qu'il est mis en oeuvre dans l'un des solvants éther de pétrole 100/140 (essence naphta), benzène ou toluène.
